(19) Europäisches Patentamt
European Patent Office
Office européen des brevets

(11) **EP 3 236 479 A1**

(12) **EUROPEAN PATENT APPLICATION**

(43) Date of publication:
**25.10.2017 Bulletin 2017/43**

(51) Int Cl.:
*H01B 1/22* (2006.01)          *H05K 9/00* (2006.01)
*C09J 9/02* (2006.01)

(21) Application number: **16166403.2**

(22) Date of filing: **21.04.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Henkel AG & Co. KGaA**
**40589 Düsseldorf (DE)**
• **Henkel IP & Holding GmbH**
**40589 Düsseldorf (DE)**

(72) Inventors:
• **CAI, Jianfen**
**San Marino, CA 91108 (US)**
• **BRIERS, David**
**3500 Hasselt (BE)**
• **POOLE, Callum**
**Corona, CA 92882 (US)**
• **DREEZEN, Gunther**
**2491 Balen - Olmen (BE)**
• **CHAPMAN, Anthony**
**Surfside, CA 90743 (US)**
• **STARKEY, Dale R.**
**Irvine, CA 92604 (US)**

(54) **AN ELECTRICALLY CONDUCTIVE, HOT-MELT ADHESIVE OR MOULDING COMPOSITION**

(57)     The present invention is related to an electrically conductive, hot-melt adhesive or moulding composition, said composition comprising: a) a binding agent which comprises at least one (co)polymer selected from the group consisting of polyamide, thermoplastic polyamide, copolyamide, polyolefins, poly(meth)acrylates, polystyrene, polyurethanes, polyesters, ethylene copolymers, ethylene vinyl copolymers, styrenic block copolymers, polylactic acid, silicones, epoxies and polyols; and, b) a conductive filler comprising particles (p1) which have a mass median diameter (D50) of ≤100 microns and which are selected from the group consisting of flakes, platelets, leaf-like particles, dendritic particles, rods, tubes, fibres, needles and mixtures thereof, wherein said composition has a melt viscosity of from 2500 to 25000 mPa·s as measured at 210°C and is further characterized in that said particles (p1) constitute from 15 to 70 wt.%, by weight of the composition. Preferably, the binding agent comprises at least one (co)polymer selected from the group consisting of polyamide, thermoplastic polyamide and copolyamide.

EP 3 236 479 A1

**Description**

**Field of the Invention**

The present invention is directed to an electrically conductive, hot-melt adhesive or moulding composition, which can be applied by low pressure injection techniques or by printing. More particularly, the present invention is directed to an electrically conductive, hot-melt adhesive or moulding composition, which comprises conductive fillers having particular shapes and dimensions and a binding agent based on polyamides, thermoplastic polyamides or co-polyamides.

**Background to the Invention**

An electronic circuit board houses a plethora of delicate components such as gold wire transistors, glass diodes, capacitors, resistors, semiconductors and silica chips. As such, components make a given device function properly, the protection of those components is of vital importance.

The potting and encapsulation of such electronic components can provide reliable protection against environmental conditions such as: moisture; thermal shock; thermal cycling; corrosive chemicals, including salts, solvents, gases and oils; vibration; and, mechanical shock. As a corollary, the potting and encapsulation can prevent or deter the unwanted removal - through accident or theft - of high value components bearing, for example, specific memory or usage information.

As is known in the art, potting and encapsulation can be affected using compositions based on *inter alia* silicones, epoxies, polyesters, polyamides and polyurethanes. The polymeric material is provided in a liquid state. Appropriate metering, mixing and dispensing equipment injects the liquid compositions under pressure directly into or onto the electronic component retained within a mould, the polymeric material flows around and under the components, and subsequently solidifies in the mould by cooling or cross-linking, depending on the selection of polymeric material. Significant aims of such injection moulding techniques are to minimize harm to the wiring and memory patterns of the electronic components and to ensure that the moulded, polymeric material is air free.

An acknowledged trend in the electronics industry is that of miniaturization of components; this is discussed, for instance, in http://phys.org/news/2015-12-electronics-small-big-problems.html. One response to this trend has been to include electrically conductive fillers within potting and encapsulation compositions, whereby the filled compositions can provide electromagnetic interference / radio frequency interference shielding and can moderate other electronic boundary and interface effects, which are the consequence of the reducing size of the components. Problematically, if one adds an increased amount of a conductive filler to a given moulding composition, the viscosity of that composition also increases; the composition has to be injected into a mould under increasing pressure to ensure that it can effectively encapsulate the electronic components therein prior to solidifying. Such elevated pressure can be damaging to those electronic components, however.

For encapsulation technologies based on thermosetting polymers, the need for high pressure injection can be obviated by using a slower curing resin of which the viscosity does not rapidly increase as it flows around a component. However, long curing times equate to long moulding cycle times and low production rates. Moreover, during the long curing time, moisture absorption and thermal stresses can cause damage to and destruction of electronic components.

An alternative solution to the need to elevate injection pressure is the employment of reaction injection moulding (RIM) techniques, whereby two or more low viscosity, liquid reactants are subjected to highpressure impingement mixing before their injection into and polymerization within a closed mould. However, conductive fillers can settle where the viscosity of the injected, reacting composition is too low. Moreover, small variations in the viscosity of the reacting composition as it flows around the electronic components can result in a heterogeneous distribution of the fillers, which may detrimental to the performance or reliability of an electronic component.

The present invention is concerned with the incorporation of conductive fillers within hot-melt adhesive or moulding compositions, which are based, in particular, on polyamides and to the use of said compositions in injection moulding techniques including the encapsulation, under-filling and over-moulding of electronic components. To date, it is considered that the prior art has not provided a resolution of the problem of incorporating conductive fillers into polyamide based moulding compositions which: i) does not require high pressure injection moulding techniques; ii) provides a clean and simple process having operable cycle times; and / or iii) satisfactorily resolves issues of filler settling and filler heterogeneity.

CN 103320076 A (Suzhou Howbond New Material Co. Ltd.) describes an anisotropic, solvent-free conductive hot melt adhesive which consists of from 75 to 97 wt.% of hot melt glue and from 3 to 25 wt.% of conductive particles, wherein the hot melt glue is selected from polyester resin, polyamide resin or polyurethane resin of which the softening point is more than 90°C. The constituent conductive particles are selected from: silver, nickel or gold metallic particles; ball-shaped or random platinum particles which have been coated with silver, nickel, gold or platinum; or polyacrylate monodisperse microspheres.

EP 2 466 811 A (BASF SE) describes a thermoplastic moulding composition which comprises, based on the weight of the composition: (a) at least one polyamide (PA), copolyamide or a polyamide-comprising polymer blend; (b) from 0.1 to 10 wt.% of carbon nanotubes and / or graphenes; and, (c) from 0.1 to 3 wt.% of ionic liquids. The thermoplastic moulding composition is characterized in that it does not comprise polyamide-12 units.

JP 2013 095791 A (UBE Industries) describes a conductive moulding composition which comprises: (A) a polyamide resin; and, (B) a conductivity imparting agent. The resinous component (A) is produced by binding a unit derived from a dicarboxylic acid to a unit derived from at least two diamines, wherein said dicarboxylic acid includes oxalic acid and said diamines include 1,6-hexanediamine and 2-methyl-1,5-pentanediamine provided in a molar ratio of from 99:1 to 50:50.

JP 2010 006998 A (Mitsubishi Materials Corp.) describes an electroconductive composition which comprises a polyamide resin in which has been incorporated an electroconductive filler and an electroconductive auxiliary agent selected from azine-base dyes. In a preferred embodiment, the resin composition comprises from 0.01 to 5 wt.% of nigrosine as the electroconductive auxiliary agent. In a further embodiment, the composition comprises from 0.1 to 10 wt.% of carbon nanofibre as the electroconductive filler.

WO2003/035739 (Hitachi Chemical Co. Ltd) describes an electroconductive resin composition which comprises: a silver-plated copper powder (a1) having an aspect ratio of 1 to 20 or a silver-plated cooper powder (a2) having cooper exposed on a part of the surface thereof; an electroconductive powder containing a silver powder (A1); a thermoplastic resin (B1) having one or more functional groups selected from the group consisting of an amide group, an ester group, an imide group and an ether group; and, an organic solvent (C). In an alternative embodiment, there is described an electroconductive resin composition which comprises: said electroconductive silver powder (A1), a thermoplastic resin (B2) selected from the group consisting of a polyamide silicone resin, a polyamideimide silicone resin and a polyimide silicone resin; and, an organic solvent (C).

US 2014/0374032 A1 (Heucher et al.) describes a hot-melt adhesive containing, by weight of said adhesive: 20 to 90 wt.% of at least one polyamide having a molecular weight (Mw) from 10,000 to 250,000 g/mol; and, 1 to 25 wt.% of at least one organic or inorganic salt; 0 to 60 wt.% of further additives, wherein the adhesive has a softening point from 100° to 220°C. Additionally described is a process for reversible adhesive bonding of substrates, wherein the adhesive bond is released under tension after application of an electrical voltage.

### Statement of the Invention

In accordance with a first aspect of the present invention, there is provided an electrically conductive, hot-melt adhesive or moulding composition, said composition comprising:

> a) a binding agent which comprises at least one (co)polymer selected from the group consisting of polyamide, thermoplastic polyamide, copolyamide, polyolefins, poly(meth)acrylates, polystyrene, polyurethanes, polyesters, ethylene copolymers, ethylene vinyl copolymers, styrenic block copolymers, polylactic acid, silicones, epoxies and polyols; and
>
> b) a conductive filler comprising particles (p1) which have a mass median diameter (D50) of less than or equal to 100 microns and which are selected from the group consisting of flakes, platelets, leaf-like particles, dendritic particles, rods, tubes, fibres, needles and mixtures thereof,

wherein said composition has a melt viscosity of from 2500 to 25000 mPa·s as measured at 210°C and is further characterized in that said particles (p1) constitute from 15 to 70 wt.%, by weight of the composition. Said particles of conductive filler (p1) may preferably be constituted by flakes and / or fibres.

The binding agent preferably comprises at least one (co)polymer selected from the group consisting of polyamide, thermoplastic polyamide and copolyamide. More preferably, the binding agent comprises from 80 to 100 wt.%, by weight of the binding agent, of said at least one (co)polymer selected from the group consisting of polyamide, thermoplastic polyamide and copolyamide. And in a particularly preferred embodiment, the binding agent comprises or consists of a dimer acid-based polyamide. Further, the selected polyamide, thermoplastic polyamide or copolyamide of the binding agent should preferably be characterized by one or more of: a softening point in the range from 130°C to 200°C; a melt viscosity of from 1000 to 10000 mPa·s, preferably from 1000 to 8000 mPa·s, as measured at 210°C; and, an amine number of $\leq 10$.

In a primary embodiment of the present invention, the particles of conductive filler (p1) constitute from 15 to 60 wt.% or from 15 to 50 wt.%, by weight of the composition. Independently of this embodiment, the particles of conductive filler (p1) may be selected from the group consisting of: (p1a) a pure silver powder; a metal particle coated with silver on its surface or a mixture thereof; (p1 b) carbon fibres having a length of from 5 to 100 microns; and, (p1c) silver coated graphite particles, nickel coated graphite particles, gold coated graphite particles or mixtures thereof.

The combination of the particle size with particle shape and / or aspect ratio of the conductive filler ensures that the filler does not show any appreciable settling when the composition is in the molten state and, in particular, when the composition is at its application temperature of from 200° to 270°C, for example 210° to 240°C. Moreover, this combination ensures that the composition, when cooled from a molten state, shows favourable electrical conductivity. The moulded orotherwise applied hot melt composition may have a volume resistivity of from 0.0001 to 1 ohm.cm or from 0.0001 to 0.01 ohm.cm.

The composition preferably has a viscosity at 210°C of from 5000 to 17500 mPa·s, for example from 5000 to 12500 mPa·s or from 7500 to 12500 mPa·s. As a consequence of having such a low viscosity at 210° C., the inventive composition can be used in low pressure moulding processes or even, advantageously, applied using printing techniques or apparatus.

A second aspect of the present invention provides for the use of the composition, as defined above and in the appended claims, for the encapsulation, over-moulding and under-filling of electronic components. Such uses may preferably entail the low pressure injection of the composition, typically at an application temperature of from 200° to 270°C, for example 210° to 240°C.

In accordance with a third aspect of the present invention, there is provided a method of forming a conductive feature on a substrate, said method comprising the steps of: i) providing a substrate; ii) providing an electrically conductive composition as defined herein above and in the appended claims, melting said composition and depositing said molten composition onto said substrate at a temperature of from 200° to 270°C, preferably from 210° to 240°C; and, iii) allowing said composition to cool and solidify, wherein in said method the electrically conductive composition is deposited onto said substrate by a method selected from the group consisting of: additive manufacturing; screen printing; dispenser printing; ink jet printing; stencil printing; rotary screen printing; flexographic printing; gravure printing; and, spin coating.

## **Definitions**

As used herein, the singular forms "*a*", "*an*" and "*the*" include plural referents unless the context clearly dictates otherwise.

The terms *"comprising", "comprises"* and "*comprised of*" as used herein are synonymous with *"including", "includes", "containing"* or "*contains*", and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be considered understood that any ranges obtainable by combining any upper limit or preferable value with any lower limit or preferable value are also specifically disclosed, irrespective of whether the obtained ranges are clearly mentioned in the context.

The D50 (mass median diameter) particle sizes may be obtained using conventional light scattering techniques and equipment, such as: Hydro 2000 MU, available from: Malvern Instruments, Ltd., Worcestershire, United Kingdom; or Sympatec Helos, Clausthal-Zellerfeld, Germany.

As used herein, the term "*specific surface area*" refers to the surface area per unit mass of the particles concerned. As is known in the art, the Brunauer, Emmett, and Teller (BET) method may be employed to measure the specific surface area of said particles, which method includes the steps of flowing gas over a sample, cooling the sample, and subsequently measuring the volume of gas adsorbed onto the surface of the sample at specific pressures.

*"Aspect ratio",* as used herein, relates to the ratio between sizes in different dimensions of a three-dimensional object, more particularly the ratio of the longest side to the shortest side, for example height to width. Ball-shaped or spherical particles therefore have an aspect ratio of about 1. Flakes, platelets, rods, fibres and needles tend to have aspect ratios of more than 10, as they have in relation to their length or length and width a comparably small diameter or thickness. The aspect ratio can be determined by Scanning Electron Microscopy (SEM) measurements. As the software, "*Analysis Pro*" from Olympus Soft Imaging Solutions GmbH can be used. The magnification is between x250 to x1000 and the aspect ratio is a mean value obtained by measuring the width and the length of at least 50 and typically 100 particles in the picture. In case of relatively big and flaky fillers, the SEM measurements can be obtained with a sample tilt angle of 45° of the sample.

As used herein, the term "*(co)polymer*" includes homopolymers, copolymers, block copolymers and terpolymers.

As used herein, softening point (°C.) is the Ring & Ball softening point, which is measured unless otherwise indicated according to ASTM E28.

The amine number as referred to herein is the number of milligrams of potassium hydroxide equivalent to the equivalent of hydrochloric acid required to neutralize amino groups included in 1g of the polyamide or copolyamide. More specifically, the amine number is measured as follows:

$$Amine\ number = (x{\times}f{\times}y{\times}56.108)/z$$

wherein: (x) represents the amount (mL) of hydrochloric acid required for neutralization, (f) represents the titer of hydrochloric acid, (y) represents the concentration (mol/L) of hydrochloric acid, and (z) represents the weight (g) of the polyamide or copolyamide.

The term "*hot-melt*" as used herein describes an adhesive that is non-flowable at room temperature, but converts to a flowable state at an elevated, application temperature of, for example, from 200° to 270°C.

Where the viscosity of the electrically conductive composition is mentioned herein, this viscosity has been measured at the stated temperature, employing a Thermosel heating chamber and a Brookfield Viscometer Spindle 27 at 10 rpm, according to ASTM D 3236-88.

As used herein, "*injection pressure"* is defined as the pressure of the hot-melt composition entering a mould cavity and by which the composition is forcibly pushed through said cavity by an injection moulding machine.

Where the term "*low pressure injection*" is employed, this is intended to mean an injection pressure of from 2 to 50 Bar, preferably 2 to 40 Bar. It will be recognized that the injection pressure can, where applicable, be related to the "hydraulic pressure" which is defined as the pressure of the fluid (e.g. oil) which is used to provide the force that pushes the screw forward during the injection period of a moulding cycle. Thus, the method of the invention may be characterized by the employment of a low hydraulic pressure.

As used herein, the term "*application temperature*" will refer to the temperature at which the viscosity of the composition is such it will be substantially fluid and can be deposited as a fluid onto a substrate. The term encompasses the "*injection temperature*", that is the melt temperature of the composition entering a mould cavity in an injection moulding process.

The term "*additive manufacturing*" as used herein refers to methods of joining or shaping materials by which objects are built from 3D-model data, usually layer-upon-layer; it may be contrasted with subtractive manufacturing technologies. The term "*3D-printing*" is often used as a synonym for additive manufacturing. The disclosure of ASTM52900-15 or, where appropriate, the updated version of said Standard may here be instructive.

Where the Volume Resistivity (VR) of the solidified electrically conductive composition is given herein, this parameter may be determined in accordance with the following protocol: i) an insulator block with a 0.3 x 0.3 x 14.8 cm slot is selected as a mould; ii) prior to filling the slot with the test material, two copper wires (1 mm diameter) are placed at both ends of the slot, whereby the distance between the ends of both wires will be the length to be used to calculate the volume resistivity; iii) the mould is then preheated to the desired temperature, said temperature being at least the softening point of the (co)polymer in the material to be tested; iv) the slot is filled with the liquefied test sample and the surface is smoothed using a spatula to remove excess material; v) the sample is allowed to cool down to room temperature; vi) the resistance over the two copper wires is then measured using a Fluke 8842A multimeter; and, vii) Volume Resistivity is calculated from the equation VR = (width of the sample (cm) x thickness of the sample (cm) x Resistance (Ohm)) / length of the sample (cm). In the Examples herein below, Volume Resistivity (VR) is an average of three measurements each made in accordance with this protocol.

## Detailed Description of the Invention

As defined above, the composition of the present invention comprises from 15 to 70 wt.%, by weight of the composition, of particles of conductive filler (p1) which have a mass median diameter (D50) of less than or equal to 100 microns and which are selected from the group consisting of flakes, platelets, leaf-like particles, dendritic particles, rods, tubes, fibres, needles and mixtures thereof. The particles of conductive filler (p1) preferably constitute from 15 to 60 wt.% and more preferably from 15 to 50 wt.%, by weight of the composition.

It will be recognized that spherical particles and substantially equant or isotropic particles of low aspect ratio are precluded from constituting said particles (p1). The particles (p1) may, for conciseness, be referred to hereinafter as particles of high aspect ratio conductive filler and may, for instance, be characterized by an aspect ratio of at least 10:1, at least 20:1 or even at least 40:1. Of those particle shapes listed for said particles (p1), a preference for flakes, platelets, leaf-like particles and fibres might be mentioned and a particular preference for flakes and fibres is noted.

The term "*flake*" is intended to encompass shards, wedges, trapezoids and the like, which have a width and depth much greater than their thickness. For completeness, the term "*platelet*" herein refers to a particle structure defined by opposite substantially flat and substantially parallel faces, the distance between the faces defining a thickness of the particles. As used herein, the phrase "*leaf-like*" is intended to include platelet-like structures of which the shape of the faces resemble that of leaves; they may have, for instance, a spine-like structure within the face. The leaf-like morphology may further include nanostructures on the particle surfaces including, but not limited to, cross-hatches, rods, grains, and platelets.

Methods of preparing such shaped, electrically conductive fillers are well known in the art. For example, silver particles of high aspect ratio can be produced by chemical precipitation, electrolytic deposition or atomization. Also, metallic flakes can be produced by grinding or milling a metal powder in the presence of a lubricant, such as a fatty acid or fatty acid ester.

The conductive filler may consist solely of the particles (p1). Alternatively, the conductive filler may comprise other particles (p2) - in addition to the particles (p1) - which do not meet one or more of the conditions of shape, aspect ratio and particle size parameters defined above. The amount of such additional particles (p2) which can be tolerated in the composition is necessarily limited by the viscosity requirements of the conductive composition and the desire to avoid particle settling in the melt state of the composition. The maximum amount of such additional particles (p2) will also depend on the identity and particle loading of the high aspect ratio conductive particles (p1). A maximum amount of particles (p2) of 10 wt.% or 5 wt.%, based on the weight of the composition may be suitable, for instance.

In a first embodiment, the particles of high aspect ratio conductive filler (p1a) consist of: a pure silver powder; a metal particle coated with silver on its surface; or, a mixture thereof. The fine, silver powder can be a commercially available product or may be prepared methods known in the art, such as mechanical milling, reduction, electrolysis and vapour phase processes.

Where a metal particle coated with silver on its surface is used as at least a portion of the conductive filler (p1a), the core of the particle may be constituted by copper, aluminium, iron, zinc, titanium, cobalt, chromium, tin, manganese or nickel or alloys of two or more of said metals. A preference for copper as the core of the particle (p1a) may be mentioned. Further the coating of silver should constitute at least 5 wt.%, preferably at least 20 wt.% and more preferably at least 40 wt.% based on the weight of the particle. And such a silver coating may be formed by electroless Ag-plating, electroplating or vapour deposition, as is known in the art.

For completeness, commercially available silver powders suitable for inclusion in the present invention include but are not limited to: FA-SAB-534, available from Dowa; P554-19, P620-22, P698-1, F741-6, F747-3 and F781-1, available from Metalor; SF134, available from Ames-Goldsmith; and, AgCu200Ci and AgCu0810C-15 available from Ames Goldsmith (previously Ferro Electronic Material Systems).

In a second embodiment concerning said high aspect ratio particles (p1), the composition comprises from 15 to 50 wt.%, preferably from 15 to 30 wt.%, based on the total weight of the composition, of particles of a conductive filler (p1 b) consisting of carbon fibres, wherein said carbon fibres are characterized by an aspect ratio of at least 40 and a length of from 5 to 100 microns. The carbon fibres of this embodiment are more preferably characterized by: an aspect ratio of at least 50; and, a length of from 50 to 100 microns.

Whilst the presence of carbon fibres in entangled "bird nest" agglomerates is not precluded, it is preferred that the fibres are in the form of discrete particles. The carbon fibre may be chosen from conventionally known carbon fibres, including vapour grown carbon fibres and those derived from polyacrylonitrile (PAN) or pitch.

The conductive filler (p1 b) of this embodiment may optionally be included in the composition together with up to 15 wt.%, by weight of the composition, of an electrically conducting carbon black (p2b) characterized by a mass median diameter (D50) of from 1 to 80 microns, a specific surface area of from 60 to 500 $m^2/g$, and a Dibutyl phthalate (DBP) oil absorption of from 100 to 350 $cm^3/100$ g as measured in accordance with ASTM D-2414. Said carbon black may be more preferably characterized by: a specific surface area of from 200 to 500 $m^2/g$; and, a Dibutyl phthalate (DBP) oil absorption of from 200 to 350 $cm^3/100$ g.

The carbon black may be produced by any available process and useful sources include furnace blacks, lamp blacks, acetylene blacks, channel blacks and gas blacks. Examples of suitable, commercially available electrically-conductive carbon black include: Ketjen Black EC available from Akzo Nobel; and, Black Pearls 2000, Vulcan XC-72, Vulcan P and Sterling C available from the Cabot Corporation.

In a further embodiment, the high aspect ratio particles of conductive filler (p1c) consist of: silver coated graphite particles; nickel coated graphite particles; gold coated graphite particles; and, mixtures thereof. The silver, gold or nickel coating is functional to provide bulk conductivity from particle to particle.

To form the particles of this embodiment, the nickel, silver or gold coating may be applied to a graphite core particle - composed of graphite flakes, graphite nanotubes, exfoliated graphite nano-platelets, expanded graphite and mixtures thereof - using techniques familiar to the skilled person, such as electro-less plating, carbonyl process or hydrometallurgy. Whilst it is preferred to completely encapsulate the graphite core with the metal, it will be understood that the desired conductivity may be attained with partial cladding of the core by the metal. Desirably, the coating of nickel, silver or gold should constitute at least 20 wt.% and more preferably at least 40 wt.% based on the weight of the coated graphite particle.

The so-coated graphite particles may be characterized by: a specific surface of $\geq 50$ $m^2/g$, preferably $\geq 75$ $m^2/g$ and more preferably $\geq 100$ $m^2/g$; and, an aspect ratio of $\geq 100$, preferably $\geq 200$. It is noted that the upper limit of specific surface area approaches 2700 $m^2/g$ for a theoretical or hypothetical single graphene sheet or monolayer graphite; the theoretical aspect ratio of such a structure is also very high. However, the practically available surface areas and aspect ratios of coated graphite particles are lower than the theoretical maxima and said practical upper limits constitute the upper limits of these parameters in this embodiment.

In a first, non-limiting example of this embodiment, the particles of conductive filler (p1c) consist of gold or nickel coated graphite, have a mass median diameter (D50) of from 50 to 100 microns and are included in the composition in an amount of from 15 to 55 wt.%, based on the weight of the composition. In a second, non-limiting example of the embodiment, the particles of the conductive filler (p1c) consist of silver coated graphite, have a mass median diameter (D50) of from 30 to 60 microns and are included in the composition in an amount of from 30 to 60 wt.%, based on the weight of the composition.

The composition of the present invention includes a binding agent which comprises at least one (co)polymer selected from the group consisting of: polyamide; thermoplastic polyamide; copolyamide; polyolefins, preferably alpha-olefins, more preferably butyl rubber or polybutene; poly(meth)acrylates; polystyrene; polyurethanes, preferably thermoplastic polyurethane; polyesters; ethylene copolymers; ethylene vinyl copolymers; styrenic block copolymers, preferably styrene-butadiene (SB), styrene-ethylene-butadiene-styrene (SEBS), styrene-isoprene (SI), styrene-isoprene-styrene (SIS), styrene-butadiene-styrene (SBS), styrene-isoprene-butadiene (SIB), or styrene-isoprene-butadiene-styrene (SIBS); polylactic acid (PLA); silicones; epoxies; and, polyols.

As mentioned above, it is preferred that the composition of the present invention includes a binding agent which comprises at least one (co)polymer selected from the group consisting of polyamide, thermoplastic polyamide and copolyamide. For example, the binder agent may comprise at least one of polyamide and thermoplastic polyamide.

The polyamides, thermoplastic polyamides and copolyamides should be characterized by a softening point in the range from 130°C to 200°C. Suitable polyamides, thermoplastic polyamides and copolyamides may, in particular, have a viscosity at 210°C of from 1000 to 10000 mPa·s, more preferably from 1000 to 8000 mPa·s.

Still further the polyamide, thermoplastic polyamide or copolyamide may be characterized by an amine number of $\leq 10$, in particular $\leq 3$. When the amine number is in this range it has been found that the flowability of the overall composition, when melted, is stabilized.

In an important embodiment of the present invention, the binding agent comprises a "dimer acid-based polyamide", that is a polymer produced by the reaction - preferably the poly-condensation reaction - of an acid component (A) comprising a dimer acid and a diamine component (B). The presence of one or more of a monocarboxylic acid, a dicarboxylic acid and a multivalent carboxylic acid in the acid component (A), in addition to the dimer acid, is not precluded. However, the dimer acid should preferably constitute at least 50 mol.% and more preferably at least 75 mol.% of the acid component (A).

As is known in the art, the dimer acid may be produced by bimolecular polymerization of an unsaturated fatty acid, such as oleic acid and linoleic acid, a drying oil fatty acid or a semi-drying oil fatty acid, and a lower mono-alcohol ester of these fatty acids, optionally in the presence of a catalyst. The product obtained will contain dimer as the main component but also unreacted monomer and higher-order polymers. As needed, the amount of dimer acid therein may be concentrated by fractionation via, for example, vacuum distillation or a solvent extraction process. Furthermore, if desired, the polymerized fatty acids may be hydrogenated before or after the fractionation so as to produce a saturated dimer acid.

For completeness, commercially available dimer acids which may be used individually or in combination to produce polyamides for use in the present invention include: Pripol 1006, Pripol 1010, Pripol 1012, Pripol 1013, Pripol 1014, Pripol 1017, Pripol 1022, Pripol 1025, Pripol 1027 and Pripol 1029 made by Croda Japan KK; and, Tsunodime 216 and Tsunodime 395 made by Tsuno Co. Ltd.

Suitable monocarboxylic acids which may be present individually or in combination in the acid component (A) include but are not limited to: acetic acid; propionic acid; benzoic acid; lauric acid; oleic acid; stearic acid; tall oil fatty acid; cyclohexane carboxylic acid; and, 1-adamantane carboxylic acid.

Suitable dicarboxylic acids which may be present individually or in combination in the acid component (A) include, but are not limited to: oxalic acid; malonic acid; succinic acid; glutaric acid; adipic acid; pimelic acid; suberic acid; azelaic acid; sebacic acid; nonamethylenedicarboxylic acid; decamethylenedicarboxylic acid; undecamethylenedicarboxylic acid; dodecamethylenedicarboxylic acid; tridecamethylenedicarboxylic acid; tetradecamethylenedicarboxylic acid; pentadecamethylenedicarboxylic acid; hexadecamethylenedicarboxylic acid; maleic acid; fumaric acid; phthalic acid; terephthalic acid; 1,3-, or 1,4-cyclohexanedicarboxylic acid; and, 1,3-adamantanedicarboxylic acid.

Suitable multivalent carboxylic acid which may be present individually or in combination in the acid component (A) include but are not limited: 1,2,4-benzenetricarboxylic acid; 2,5,7-naphthalenetricarboxylic acid; 1,2,4-naphthalenetricarboxylic acid; 1,2,4-butanetricarboxylic acid; 1,2,5-hexanetricarboxylic acid; 1,2,4-cyclohexanetricarboxylic acid; tetra(methylenecarboxyl)methane; 1,2,7,8-octanetetracarboxylic acid; and, pyromellitic acid.

The diamine component (B) will usually comprise one or more of: ethylenediamine; triethylenediamine; tetraethylenediamine; hexamethylenediamine; p- or m-xylenediamine; 4,4'-methylene bis(cyclohexylamine); 2,2-bis(4-cyclohexylamine); polyetherdiamine; isophoronediamine; 1,2-, 1,3-, or 1,4-cyclohexanediamine; 1,4-bis(2'-aminoethyl)benzene; piperazine; 1,3-di-4-piperidylpropane; and, a dimer diamine having an amino group converted from a carboxyl group of the above mentioned dimer acids. A preference might be noted for the use of one or more of ethylenediamine, hexamethylenediamine, polyetherdiamine, piperazine, 1,3-di-4-piperidylpropane, and the dimer diamine.

To produce the dimer acid based polyamide the acid component (A), the diamine component (B) and optionally a solvent or diluent are mixed and heated, typically to a temperature of from 150° to 300°C and for a period of from 2 to 10 hours. The diamines and acid compounds are mixed such that, in total, the amine: acid molar ratio is from 0.8:1 to 1.25:1. By appropriate adjustment of this ratio, the properties of the resultant polyamide - in particular the softening point thereof - can be modified. To drive the reaction, the by-product of water or alcohol is removed. The reaction mixture may be vacuum stripped by procedures known to the skilled person.

Examples of commercially available polyamides and copolyamides which find utility in the present invention include: Technomelt PA633, Technomelt PA641, Technomelt PA646, Technomelt PA651, Technomelt PA652, Technomelt PA657, Technomelt PA641, Technomelt PA673, Technomelt PA682, Technomelt PA6208, Technomelt PA6790, Technomelt PA6801, Technomelt PA6830, Technomelt PA6832, Technomelt PA6839 and Technomelt TPX 22-547 (previously TCRF12014) available from Henkel Corporation. Among these, a preference for Technomelt PA673 and TPX 22-547 might be mentioned.

For completeness, it is noted that the employment of polyamides, thermoplastic polyamides or copolyamides does not preclude the presence of further (co)polymers within the binding agent, provided that any further (co)polymers do not have a softening point, melting temperature or viscosity which is deleterious to the performance of the composition. An exemplary, suitable binding agent might thereby comprise: a) from 80 to 100 wt.%, by weight of the binding agent, of at least one (co)polymer selected from the group consisting of polyamide, thermoplastic polyamide and copolyamide; and, b) from 0 to 20 wt.%, by weight of the binding agent of a (co)polymer selected from the group consisting of: polyolefins, poly(meth)acrylates, polystyrene, polyesters, ethylene copolymers, ethylene vinyl copolymers, styrenic block copolymers, polylactic acid, silicone, epoxies and polyols.

In addition to the conductive fillers and the binding agent, the composition of the present invention may further comprise one or more additives, preferably selected from the group consisting of tackifiers, plasticizers, dyes, adhesion promoters, waxes, antioxidants, ion scavengers, surfactants, stabilizers, rheology modifiers, and combinations thereof. The total amount of said additives in the compositions of the present invention may generally be from 0 to 10 wt.%, based on the weight of the composition.

In an embodiment, the composition may comprise at least one tackifier. Most generally, any resins which are compatible with (soluble in) the corresponding thermoplastic resin can be used. Typically, appropriate tackifier resins will also have a softening point of from 70°C to 150°C. And the "Handbook of Pressure Sensitive Adhesive Technology" by Donatas Satas (van Nostrand, 1989) may provide useful guidance in selecting such tackifiers. That aside, exemplary tackifiers that can be used include, but are not limited to: abietic acid and abietic acid esters; terpene resins; terpene phenolic resins; poly-alpha-methylstyrene; phenol-modified styrene polymers; phenol-modified alpha-methylstyrene polymers; resorcinol resins; hydrocarbon resins, in particular aliphatic, cycloaliphatic, aromatic or aromatic-aliphatic hydrocarbon resins; cumarone-indene resins; and mixtures thereof.

Waxes can, for example, be used in combination with the above defined tackifiers. Exemplary waxes that can be used include, without limitation, polar waxes selected from functionalized polyolefins with a number average molecular weight ($M_N$) range as determined by GPC of from 4000 to 80000 and which are based on ethylene and/or propylene with acrylic acid, methacrylic acid, C1-4 alkyl esters of (meth)acrylic acid, itaconic acid, fumaric acid, vinyl acetate, carbon monoxide, and in particular maleic acid and mixtures thereof. Preferred are ethylene, propylene or ethylene-propylene (co)polymers grafted or copolymerized with polar monomers and having saponification and acid values, respectively, between 2 and 50 mg KOH/g. Saponification and acid values can be determined by titration.

The rheology of the compositions can be adjusted by the addition of so-called extender oils, i.e. aliphatic, aromatic or naphthenic oils, low molecular weight polybutenes or polyisobutylenes. Additionally poly-alpha-olefins which are liquid at 25°C can be employed which are commercially available for example under the tradename Synfluid PAO. Also conventional plasticizers, such as dialkyl or alkylaryl esters of phthalic acid or dialkyl esters of aliphatic dicarboxylic acids can be used, optionally in admixture with the afore-mentioned extender oils.

Suitable stabilizers that can be used in the compositions of the invention include, without limitation, 2-(hydroxyphenyl)-benzotriazole, 2-hydroxybenzophenone, alkyl-2-cyano-3-phenylcinnamate, phenylsalicylate or 1,3,5-tris(2'-hydroxyphenyl)triazine.

Suitable antioxidants include, without limitation, those commercially available under the trademark name Irganox® (BASF, SE). Also suitable are distearyl-pentaerythritdiphosphate compounds, octadecyl esters of 3,5-bis(1,1-dimethylethyl)-4-hydroxybenzylpropanoic acid (Irganox® 1076), 2,4-bis(n-octylthio)-6-(4-hydroxy-3,5-di-tert-butylanilino)-1,3,5-triazine (Irganox® 565), 2-tert-butyl-6-(3-tert-butyl-2-hydroxy-5-methylbenzyl)-4-methylphenylacrylate, phosphite antioxidants, such as tris(nonylphenyl)phosphite (TNPP), tris(mono-nonylphenyl)phosphite, and tris(di-nonylphenyl)phosphite, bis(2,4-di-tert-butylphenyl)pentaerythritol diphosphite, tris(2,4-di-tert-butylphenyl)phosphite and combinations or 2 or more of the afore-mentioned compounds.

The compositions of the present invention may be produced using mixing equipment - such as planetary mixers, planetary dissolvers, kneaders and internal mixers - and extrusion equipment, such as twin-screw extruders, which will be familiar to those of ordinary skill in the art. It will be recognized that the residence time of the composition in a given mixer can affect the initial colour of the compositions and care should therefore be taken to minimize this residence time: elevating the temperature of the extruder through which the composition is passed might be mentioned as a means of achieving this. The extruded composition may then be pelletized.

As mentioned above, an important aspect of the present invention entails the use of the composition as a moulding composition, and more specifically for encapsulation, over-moulding and under-filling applications.

As used herein, the expression "encapsulation" means to completely surround or encase the component in a polymer material, with the only discontinuities in the encasement or encapsulation being for features which are intended, at least in part, to be disposed externally of the encapsulated item, for instance electrical leads. The term "over-moulding" is intended to refer to an arrangement in which the polymeric material together with a substrate (e.g. a circuit board) completely encases a subcomponent (e.g. an integrated circuit). The term "underfill" refers to filling of the space between a substrate (e.g., a circuit board) and a subcomponent (e.g., an integrated circuit) with the polymeric material. Even when the subcomponent is not encapsulated or over-moulded, such an underfill can serve to protect an electrical device against: mechanical shock or impact; thermal cycling; and/or environmental exposure. Over-moulding, under-filling and encapsulation may individually comprise one or more steps. Moreover, over-moulding, underfilling and encapsulation can be performed individually or in combination, and with the same or different compositions in each process.

Mouldings are produced by converting the composition into its low viscosity molten state under heating and, optionally, pressure and shear. At an application temperature of from 200° to 270°C or from 210° to 240°C, the melt is then pumped into a cold mould having one or more shaped cavities, each cavity having a gated flow channel which directs the flow of the molten material. The injected composition is held under pressure in the mould cavity, cooled as heat is drawn out of it and then removed as a solidified part having a shape, which essentially duplicates the cavity shape(s) of the mould.

Due to the relatively low viscosity of the hot melt composition at the application temperature, it is possible to pump it into the injection mould under only low pressure, such that it can flow around components disposed therein - even filigree components - without causing damage, so sealing and protecting them. Depending upon the mass (quantity of heat) involved, the cooling and solidification of the composition normally takes of the order of few seconds, whereupon the finished moulding may be removed from the mould.

Such mould processing tends to be performed on special machinery, which automatically and reliably controls material flow from melting up to the mould. Moreover, the materials forming the mould must have a fatigue limit that can withstand the maximum cyclic stress for the total number of cycles a mould is expected to run in its lifetime. The guidelines of the technical information leaflet *"Macromelt-Moulding"* dated March 1994 from Henkel KGaA may provide a useful reference for the moulding process. Further, methods and apparatus suitable for encapsulating electronic devices and components with polyamide resins, under low pressure injection, are disclosed *inter alia* in: US Patent No. 8,578,770 B2; US Patent Application Publication No. 2009/0268414; and, US Patent Application Publication No. 2014/0127338.

Without intention to the limit the moulding applications of the present invention, the hot melt compositions are suitable for: sealing and embedding switches, sensors, transponders, printed circuit boards and other electrical and electronic modules; encapsulating electrical or electronic components such as the electronic circuits (chips) which are used in modern identity, credit, bank and telephone cards ("smart" cards); and, potting and encapsulation of electronic and electrical components in the automotive sector, such as aerials and their amplifiers. For illustration, a printed circuit board may be placed into a mould designed specifically for it, and, using beads of the hot melt composition and a low pressure injection moulding machine, the board may be over-moulded.

The hot melt compositions need not be processed solely for moulding application. On account of the low viscosity of the electrically conductive compositions at their application temperature, said compositions can be deposited onto a given substrate by a method selected from the group consisting of: additive manufacturing; screen printing; dispenser printing; ink jet printing; stencil printing; rotary screen printing; flexographic printing; gravure printing; and, spin coating. And using said methods, the electrically conductive composition may be deposited on the substrate at highly specific loci. As such, one can form conductive features - such as traces, contacts, wires, electrodes, lines or other features having electrical conductivity-from the conductive compositions. For example, it is envisaged that conductive features may be disposed on the substrate by printing the composition as one or more lines having: a width of from 20 to 70 $\mu$m; and / or a thickness of from 1 to 50 $\mu$m.

The conventional devices used in said printing or spin coating methods may be modified to allow for the use of a hot-melt composition. Such modifications may include but are not limited to: heated reservoirs; microchannels, optionally provided with heating elements, from said reservoirs to the dispensing apertures; and, pumps, such as electrokinetic pumps. These modifications may be provided in an array, which can be decoupled from the conventional printer assembly.

**Illustrative Embodiments of the Present Invention**

In a first illustrative embodiment of the present invention, there is provided an electrically conductive, hot-melt adhesive or moulding composition, said composition comprising:

a) a binding agent which comprises at least one (co)polymer selected from the group consisting of polyamide, thermoplastic polyamide and copolyamide; and
b) a conductive filler comprising particles (p1) which have an aspect ratio of at least 20:1, for example at least 40:1, a mass median diameter (D50) of less than or equal to 100 microns and which are selected from the group consisting of flakes, platelets, leaf-like particles, fibres and mixtures thereof,

wherein said composition has a melt viscosity of from 2500 to 25000 mPa·s as measured at 210°C and is further characterized in that said particles (p1) constitute from 15 to 60 wt.%, by weight of the composition.

Furthermore, a hot-melt adhesive or moulding composition in accordance with the present invention, which has demonstrated good results may be defined as comprising:

a) from 40 to 85 wt.%, by weight of the composition of a binding agent consisting of dimer acid-based polyamide; and
b) a conductive filler comprising particles (p1) having a mass median diameter (D50) of less than or equal to 100 microns and which are selected from the group consisting of flakes, platelets, leaf-like particles, fibres and mixtures thereof,

wherein said composition has a melt viscosity of from 5000 to 12500 mPa·s as measured at 210°C and is further characterized in that said particles (p1) constitute from 15 to 60 wt.%, by weight of the composition.

Various features and embodiments of the disclosure are described in the following examples, which are intended to be representative and not limiting.

**Examples**

**Materials:** The following materials were employed in the Examples:

TECHNOMELT TPX 22-547: Thermoplastic polyamide having a softening point of 171°C as measured in glycerine according to ASTM E28; available from Henkel Corporation.

TECHNOMELT PA 673: Thermoplastic polyamide having a softening point of 182-192°C as measured in glycerine according to ASTM E28; available from Henkel Corporation.

AgCu200Ci: Silver coated copper particles (flakes) having a D50 of 40 microns, available from Ames Goldsmith (previously Ferro Electronic Material System).

E-Fill 2801: 75% Nickel Coated Graphite (75Ni / C25) conductive grade particles having a D50 of 73 microns, available from Oerlikon Metco.

P594-5: Silver coated graphite particles having a D50 of 17 microns and a specific surface area of 0.6 $m^2$/g, available from Metalor.

AgCu0810C-15: Silver coated copper particles having a D50 of 8 microns, available from Ames Goldsmith (previously Ferro Electronic Material Systems).

Examples 1 to 4

To form the electrically conductive compositions described in Table 1 herein below, the (co)polymer and optionally any additive(s) required were heated until the (co)polymer is molten and then mixed until a homogenous phase is obtained; to this phase, the fillers are subsequently added in any order, the resultant composition thoroughly mixed and then allowed to cool to room temperature.

The compositional values given in Table 1 are wt.%, based on the total weight of the composition. The formed compositions were then evaluated in accordance with the viscosity and volume resistivity test methods mentioned herein before. Filler settling was tested by visual examination of the compositions when held under the stated conditions.

Table 1

| Component | Ex.1 | Ex. 2 | Ex. 3 | Ex. 4 |
|---|---|---|---|---|
| Technomelt TPX 22-547 | 65 | 60 | | |

(continued)

| Component | Ex.1 | Ex. 2 | Ex. 3 | Ex. 4 |
|---|---|---|---|---|
| Technomelt OM 673 | | | 65 | 65 |
| AgCu200Ci | 35 | | | |
| E-Fill 2801 | | 40 | | |
| P594-5 | | | 35 | |
| AgCu0810C-15 | | | | 35 |
| **Tests** | | | | |
| Volume Resistivity ($\Omega$.cm) | 0.07 | 0.90 | 1.67 | 0.41 |
| Viscosity at 210°C (Pa.s) | 10 | 5.1 | 10 | 7.1 |
| Filler Settling (4 hours at 210°C) | No | Yes | No | Yes |

It is evident that these compositions have a suitable viscosity for low pressure injection moulding at 210°C. Moreover, these compositions show a desirable electrical conductivity, which would facilitate their beneficial use in encapsulation, under-filling or over-moulding of electrical components.

In view of the foregoing description and examples, it will be apparent to those skilled in the art that equivalent modifications thereof can be made without departing from the scope of the claims.

**Claims**

1.   An electrically conductive, hot-melt adhesive or moulding composition, said composition comprising:

   a) a binding agent which comprises at least one (co)polymer selected from the group consisting of polyamide, thermoplastic polyamide, copolyamide, polyolefins, poly(meth)acrylates, polystyrene, polyurethanes, polyesters, ethylene copolymers, ethylene vinyl copolymers, styrenic block copolymers, polylactic acid, silicones, epoxies and polyols; and,
   b) a conductive filler comprising particles (p1) which have a mass median diameter (D50) of less than or equal to 100 microns and which are selected from the group consisting of flakes, platelets, leaf-like particles, dendritic particles, rods, tubes, fibres, needles and mixtures thereof,

   wherein said composition has a melt viscosity of from 2500 to 25000 mPa·s as measured at 210°C and is further **characterized in that** said particles (p1) constitute from 15 to 70 wt.%, by weight of the composition.

2.   The composition according to claim 1, wherein the binding agent comprises at least one (co)polymer selected from the group consisting of polyamide, thermoplastic polyamide and copolyamide.

3.   The composition according to claim 2, wherein the binding agent comprises from 80 to 100 wt.%, by weight of the binding agent, of at least one (co)polymer selected from the group consisting of polyamide, thermoplastic polyamide or copolyamide.

4.   The composition according to any one of claims 1 to 3, wherein said polyamide, thermoplastic polyamide or copolyamide is **characterized by** a softening point in the range from 130°C to 200°C.

5.   The composition according to any one of claims 1 to 4, wherein said polyamide, thermoplastic polyamide or copolyamide is **characterized by** a melt viscosity of from 1000 to 10000 mPa·s, preferably from 1000 to 8000 mPa·s, as measured at 210°C.

6.   The composition according to any one of claims 1 to 5, wherein the binding agent comprises a dimer acid-based polyamide.

7.   The composition according to claim 6 comprising:

a) from 40 to 85 wt.%, by weight of the composition of a binding agent consisting of dimer acid-based polyamide; and,

b) a conductive filler comprising particles (p1) having a mass median diameter (D50) of less than or equal to 100 microns and which are selected from the group consisting of flakes, platelets, leaf-like particles, fibres and mixtures thereof,

wherein said composition has a melt viscosity of from 5000 to 12500 mPa·s as measured at 210°C and is further **characterized in that** said particles (p1) constitute from 15 to 60 wt.%, by weight of the composition.

8. The composition according to any one of claims 1 to 7, wherein said particles of conductive filler (p1) constitute from 15 to 50 wt.%, by weight of the composition.

9. The composition according to any one of claims 1 to 8, wherein said particles of conductive filler (p1) have an aspect ratio of at least 10:1, preferably at least 20:1 and more preferably at least 40:1.

10. The composition according to any one of claims 1 to 9, wherein said particles of conductive filler (p1a) consist of: a pure silver powder; a metal particle coated with silver on its surface; or, a mixture thereof.

11. The composition according to any one of claims 1 to 9 comprising from 15 to 50 wt.%, preferably from 15 to 30 wt.%, based on the total weight of the composition, of particles of conductive filler (p1 b) consisting of carbon fibres having a length of from 5 to 100 microns.

12. The composition according to claim 11, wherein said carbon fibres have an aspect ratio of at least 50 and a length of from 50 to 100 microns.

13. The composition according to claim 11 or claim 12 comprising, in an amount up to 15 wt.%, by weight of the composition, of an electrically conducting carbon black (p2b) **characterized by** a mass median diameter (D50) of from 1 to 80 microns, a specific surface area of from 60 to 500 $m^2$/g, and a Dibutyl phthalate (DBP) oil absorption of from 100 to 350 $cm^3$/100 g as measured in accordance with ASTM D-2414.

14. The composition according to any one of claims 1 to 9, wherein said the particles of conductive filler (p1c) consist of: silver coated graphite particles; nickel coated graphite particles; gold coated graphite particles; and, mixtures thereof.

15. Use of the composition as defined in any one of claims 1 to 14 for the encapsulation, over-moulding and under-filling of electronic components.

16. A method of forming a conductive feature on a substrate, said method comprising the steps of:

   i) providing a substrate;
   ii) providing an electrically conductive composition as defined in any one of claims 1 to 14, melting said composition and depositing said molten composition onto said substrate at a temperature of from 200° to 270°C; and,
   iii) allowing said composition to cool and solidify,

wherein in said method the electrically conductive composition is deposited onto said substrate by a method selected from the group consisting of: additive manufacturing; screen printing; dispenser printing; ink jet printing; stencil printing; rotary screen printing; flexographic printing; gravure printing; and, spin coating.

Europäisches
Patentamt

European
Patent Office

Office européen
des brevets

# EUROPEAN SEARCH REPORT

Application Number

EP 16 16 6403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 695 404 A (CHUNG KWONG TAI [US]) 22 September 1987 (1987-09-22) | 1,2, 4-10, 13-16 | INV. H01B1/22 H05K9/00 |
| Y | * example 1 * * column 2, line 63 - line 68 * ----- | 3,11,12 | C09J9/02 |
| A | WO 98/20719 A1 (JPM COMPANY INC [US]; VANDINE ROBERT W [US]; JOHNSON GEORGE F [US]; LA) 14 May 1998 (1998-05-14) * claim 1 * * page 3, line 22 - page 4, line 16 * ----- | 1-16 | |
| Y | US 2010/140534 A1 (KIM SUNG-JUN [KR] ET AL) 10 June 2010 (2010-06-10) | 3 | |
| A | * claim 2 * ----- | 1,2,4-16 | |
| Y | US 4 566 990 A (LIU NAN-I [US] ET AL) 28 January 1986 (1986-01-28) | 11,12 | |
| A | * claim 1 * * claim 31 * * page 5, line 29 - page 6, line 12 * ----- | 1-10, 13-16 | |
| | | | TECHNICAL FIELDS SEARCHED (IPC) |
| A | EP 0 185 783 A1 (GEN ELECTRIC [US]) 2 July 1986 (1986-07-02) * paragraph [0013] - paragraph [0023] * ----- | 1-16 | H01B H05K C09J |

The present search report has been drawn up for all claims

| Place of search | Date of completion of the search | Examiner |
|---|---|---|
| The Hague | 15 September 2016 | Poole, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 16 6403

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2016

| Patent document cited in search report | | Publication date | Patent family member(s) | | Publication date |
|---|---|---|---|---|---|
| US 4695404 | A | 22-09-1987 | NONE | | |
| WO 9820719 | A1 | 14-05-1998 | AU | 5179298 A | 29-05-1998 |
| | | | WO | 9820719 A1 | 14-05-1998 |
| US 2010140534 | A1 | 10-06-2010 | CN | 101747619 A | 23-06-2010 |
| | | | KR | 20100066881 A | 18-06-2010 |
| | | | TW | 201030767 A | 16-08-2010 |
| | | | US | 2010140534 A1 | 10-06-2010 |
| US 4566990 | A | 28-01-1986 | AU | 565562 B2 | 17-09-1987 |
| | | | DE | 3372490 D1 | 20-08-1987 |
| | | | EP | 0112197 A1 | 27-06-1984 |
| | | | NL | 8204288 A | 01-06-1984 |
| | | | US | 4566990 A | 28-01-1986 |
| | | | WO | 8401783 A1 | 10-05-1984 |
| EP 0185783 | A1 | 02-07-1986 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 103320076 A
- EP 2466811 A
- JP 2013095791 A
- JP 2010006998 A
- WO 2003035739 A
- US 20140374032 A1, Heucher
- US 8578770 B2
- US 20090268414 A
- US 20140127338 A

### Non-patent literature cited in the description

- **DONATAS SATAS.** Handbook of Pressure Sensitive Adhesive Technology. van Nostrand, 1989